(19) Europäisches Patentamt

European Patent Office

Office européen des brevets

(11) **EP 1 068 926 B1**

(12) **FASCICULE DE BREVET EUROPEEN**

(45) Date de publication et mention
de la délivrance du brevet:
**13.10.2004 Bulletin 2004/42**

(51) Int Cl.⁷: **B23P 11/02**, F16C 19/52,
F16C 35/077
// F16L13/007

(21) Numéro de dépôt: **00401983.2**

(22) Date de dépôt: **10.07.2000**

(54) **Procédé d'introduction d'une bague métallique dans une pièce en matériau composité à matrice organique et pièce obtenue par ce procédé**

Verfahren zum Einbringen eines metallischen Rings in Verbundmaterial mit organischer Matrix und dadurch erhaltenes Bauteil

Process of introducing a metallic ring into a compound material having an organic matrix and element obtained by the method

(84) Etats contractants désignés:
**DE GB IT**

(30) Priorité: **13.07.1999 FR 9909090**

(43) Date de publication de la demande:
**17.01.2001 Bulletin 2001/03**

(73) Titulaire: **EADS CCR**
**75016 Paris (FR)**

(72) Inventeur: **Lang, Didier**
**92500 Rueil Malmaison (FR)**

(74) Mandataire: **Poulin, Gérard et al**
**BREVALEX**
**3, rue du Docteur Lancereaux**
**75008 Paris (FR)**

(56) Documents cités:
**EP-A- 0 095 595**          **WO-A-91/06499**
**DE-A- 3 028 106**          **DE-A- 4 117 763**
**DE-A- 4 326 177**          **FR-A- 2 257 041**
**GB-A- 812 030**            **US-A- 2 476 982**

• **PATENT ABSTRACTS OF JAPAN vol. 010, no. 153 (M-484), 3 juin 1986 (1986-06-03) & JP 61 008230 A (HITACHI KINZOKU KK), 14 janvier 1986 (1986-01-14)**

## Description

L'invention concerne un procédé permettant d'introduire une bague métallique dans une pièce en matériau composite à matrice organique, soit après la fabrication de cette pièce, soit durant cette fabrication.

L'expression "bague métallique" désigne ici tout élément en métal ou en alliage métallique, de forme sensiblement annulaire, tel qu'une bague de roulement à billes ou à rouleaux, un coussinet, etc.. Une telle bague métallique peut notamment être utilisée pour supporter un arbre tournant ou une tige coulissante dans une pièce en matériau composite formant, par exemple, le carter ou le boîtier d'un mécanisme.

L'invention concerne également une pièce en matériau composite à matrice organique intégrant une ou plusieurs bagues métalliques insérées dans la pièce par ledit procédé d'introduction.

## Etat de la technique

Les pièces en matériau composite à matrice organique ont notamment pour propriété de présenter des coefficients de dilatation particulièrement faibles.

Lorsque des éléments métalliques tels que des bagues doivent être introduits dans une telle pièce, la différence entre les coefficients de dilatation du métal et du matériau composite pose des problèmes qui n'ont pas été résolus de façon satisfaisante jusqu'à présent.

Ainsi, la fabrication d'une pièce en matériau composite à matrice organique se termine toujours par un cycle de polymérisation. Le plus souvent, ce cycle de polymérisation se traduit par une élévation de la température de la pièce supérieure à 100°C, suivie d'un refroidissement progressif. L'étape de polymérisation existe aussi bien lorsque la pièce est fabriquée de façon traditionnelle, par drapage de nappes de fibres préimprégnées de résine, que lorsque la pièce est fabriquée selon la technique du moulage par transfert de résine, ou technique "RTM" (Resin Transfer Molding), selon laquelle une préforme de fibres sèches est introduite dans un moule, dans lequel on fait le vide avant d'injecter sous faible pression une résine de viscosité réduite.

Lorsque la pièce en matériau composite à matrice organique que l'on désire réaliser doit comporter une ou plusieurs bagues métalliques, la nécessité de polymériser la résine à la fin de la fabrication de la pièce interdit pratiquement l'introduction de tels éléments métalliques avant que la pièce ne soit finie. En effet, dans le cas contraire, le ou les éléments métalliques insérés dans la pièce en cours de fabrication auraient pour effet de la déformer ou de créer un jeu autour de l'élément métallique, sous l'effet de la dilatation différentielle, lors de la polymérisation.

Pour cette raison, lorsqu'on désire introduire une ou plusieurs bagues métalliques dans une pièce en matériau composite à matrice organique, cette introduction se fait généralement dans la pièce terminée. A cet effet, on usine dans la pièce un logement apte à recevoir la bague que l'on désire insérer ou on usine la paroi d'un évidement prévu à cet effet lors de la fabrication de la pièce.

Dans tous les cas, un usinage de la pièce est nécessaire. Cet usinage conduit généralement à la coupure de certaines des fibres entrant dans la composition de la pièce. Cela n'est pas sans conséquence sur la tenue mécanique de celle-ci dans la zone considérée.

Par ailleurs, lorsque les éléments métalliques sont introduits dans des pièces finies en matériau composite à matrice organique, la différence entre les coefficients de dilatation du métal et du matériau composite peut encore poser certains problèmes. C'est notamment le cas lorsque la pièce est destinée à être utilisée dans un environnement qui la conduit à subir au moins une fois une variation de température supérieure ou égale à environ 100°C. En effet, les risques de voir la pièce se déformer ou prendre du jeu sous l'effet de la dilatation plus importante des bagues métalliques sont alors réels.

## Exposé de l'invention

L'invention a pour objet un procédé permettant d'introduire une bague métallique dans une pièce en matériau composite à matrice organique, soit pendant la fabrication de cette pièce, soit après, sans que la différence entre les coefficients de dilatation du métal et du matériau composite puisse entraîner des déformations ou prises de jeu de la pièce.

Conformément à l'invention ce résultat est obtenu au moyen d'un procédé d'introduction d'une bague métallique dans une pièce en matériau composite à matrice organique, procédé caractérisé en ce qu'il comprend les étapes suivantes:

- réalisation séparée d'une frette incluant au moins une fibre bobinée et présentant un diamètre intérieur inférieur ou égal au diamètre extérieur de la bague métallique;
- montage de la bague métallique dans la frette, par refroidissement de ladite bague, de façon à former une bague composite présentant un coefficient de dilatation sensiblement égal à celui de ladite pièce.

Du fait que la bague métallique est entourée par une frette, elle forme une bague composite dont le coefficient de dilatation est pratiquement le même que celui de la pièce en matériau composite. Par conséquent, cette bague composite peut être introduite dans la pièce lors de sa fabrication, sans que les variations de température imposées par la polymérisation de la résine n'aient de conséquence sur l'intégrité de la pièce. De plus, quel que soit le moment où la bague composite est introduite dans la pièce (pendant ou après sa fabrication) tout risque de déformation ou prise de jeu de la pièce est pratiquement supprimé, même lorsque l'utilisation de celle-ci implique une ou plusieurs variations de température importantes.

Selon un premier mode de réalisation de l'invention, le montage de la bague métallique dans la frette précède une étape d'introduction de la bague composite dans la pièce finie ou en cours de fabrication.

Au contraire, selon un deuxième mode de réalisation de l'invention, la frette est introduite dans la pièce en cours de fabrication et le montage de la bague métallique dans la frette est effectué ultérieurement après une étape de polymérisation de la matière organique de la pièce.

De façon générale, on peut réaliser la frette en bobinant sur un mandrin soit une fibre sèche, soit une fibre préimprégnée de résine. Dans le premier cas, on imprègne la fibre de résine, puis on polymérise celle-ci avant de séparer le mandrin de la frette ainsi formée. Dans le second cas, on polymérise directement la résine qui imprègne la fibre, avant de séparer le mandrin de la frette.

Avantageusement, on réalise une frette tubulaire, que l'on tronçonne à la longueur de la bague métallique, avant de la monter sur celle-ci.

Dans tous les cas, on utilise de préférence des fibres de carbone pour réaliser la frette.

Dans le premier mode de réalisation de l'invention, on peut introduire la bague composite dans un logement prévu à cet effet dans la pièce finie.

Dans l'un et l'autre des modes de réalisation de l'invention, il est aussi possible d'introduire la frette ou la bague composite, en même temps qu'une préforme de fibres sèches, dans un moule présentant la forme de la pièce à fabriquer. Dans ce dernier cas, on injecte ensuite de la résine dans le moule, on polymérise cette résine, on refroidit le moule, on l'ouvre et en extrait la pièce finie, selon la technique RTM.

L'invention a également pour objet une pièce en matériau composite à matrice organique, comprenant au moins une bague métallique insérée dans ledit matériau, pièce caractérisée en ce que la bague métallique est entourée d'une frette incluant au moins une fibre bobinée autour de la bague métallique, noyée dans une matrice de résine polymérisée, la bague métallique et la frette qui l'entoure formant une bague composite présentant un coefficient de dilatation sensiblement égal à celui de ladite pièce.

**Brève description des dessins**

On décrira à présent, à titre d'exemple non limitatif, des modes de réalisation préférés de l'invention, en se référant aux dessins annexés, dans lesquels :

- la figure 1 est une vue en perspective et en coupe montrant une bague composite susceptible d'être introduite dans une pièce en matériau composite à matrice organique, conformément à l'invention ;
- la figure 2 illustre un exemple de fabrication possible de la bague composite de la figure 1 ; et
- la figure 3 est une vue en coupe schématique représentant une partie d'une pièce conforme à l'invention.

**Description détaillée de modes de réalisation préférés de l'invention**

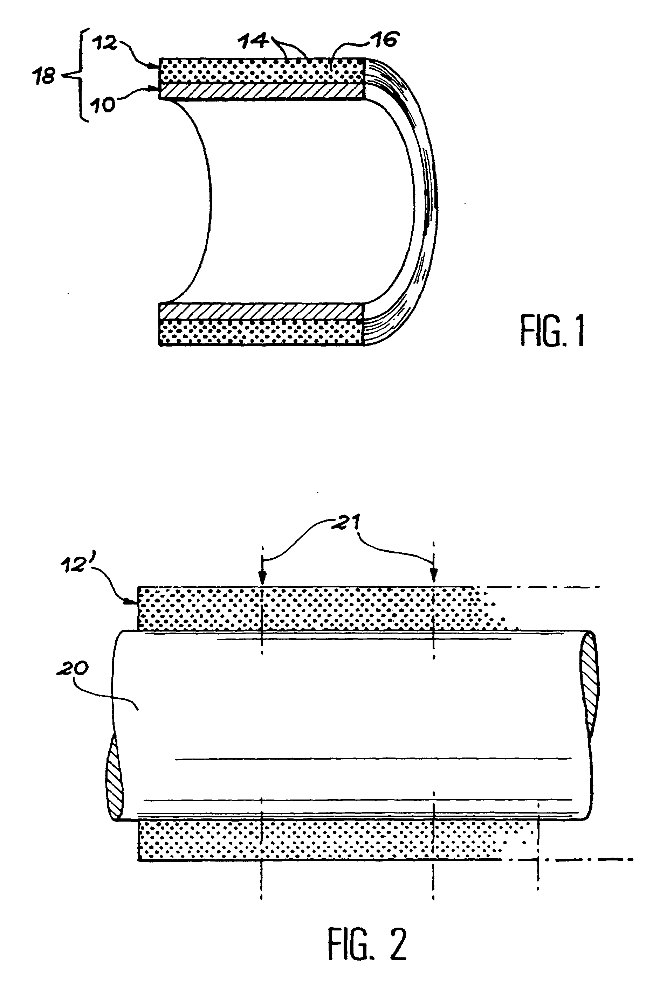

Conformément à l'invention et comme l'illustre notamment la figure 1, lorsqu'on désire introduire une bague métallique 10 dans une pièce en matériau composite à matrice organique, on place une frette 12 autour de cette bague métallique 10.

De façon plus précise, la frette 12 comprend au moins une fibre 14 bobinée autour de la bague métallique 10 et noyée dans une matrice de résine 16 polymérisée. Avantageusement, la ou les fibres 14 bobinées autour de la bague métallique 10 sont des fibres de carbone.

L'ensemble constitué par la bague métallique 10 et par la frette 12 qui l'entoure forme une bague composite 18, à l'intérieur de la pièce en matériau composite à matrice organique.

Conformément à l'invention, on détermine les caractéristiques de la frette 12, et notamment son épaisseur, en fonction du coefficient de dilatation du métal constituant la bague 10 et de l'épaisseur de celle-ci, pour que la bague composite 18 ainsi obtenue présente un coefficient de dilatation sensiblement égal à celui de la pièce dans lequel on désire introduire cette bague composite.

De façon générale, on démontre que le coefficient de dilatation $\alpha_{equi}$ de la bague composite 18 est donné par la relation :

$$\alpha_{equi} = \alpha_c \cdot \frac{e_c \cdot E_c}{e_c \cdot E_c + e_m \cdot E_m} + \alpha_m \cdot \frac{e_m \cdot E_m}{e_c \cdot E_c + e_m \cdot E_m}$$

où

$\alpha_c$ = coefficient de dilatation de la frette 12,
$e_c$ = épaisseur de la frette 12,
$E_c$ = module d'Young de la frette 12,
$\alpha_m$ = coefficient de dilatation de la bague métallique 10,
$e_m$ = épaisseur de la bague métallique 10,
$E_m$ = module d'Young de la bague métallique 10.

Dans le cas où l'on utilise une frette 12 incluant une fibre de carbone enroulée de façon unidirectionnelle autour de la bague métallique 10, le coefficient de dilatation $\alpha_c$ de la frette 12 est pratiquement nul et son module d'Young $E_c$ est au moins égal à celui $E_m$ de la bague 10. Le coefficient de dilatation $\alpha_{equi}$ de la bague composite 18 satisfait alors à la relation :

$$\alpha_{equi} \leq \left( \frac{e_m}{e_m + e_c} \right) \cdot \alpha_m \cdot$$

On peut donc choisir l'épaisseur $e_c$ de la frette afin que le coefficient de dilatation $\alpha_{equi}$ de la bague composite n'excède pas celui de la pièce en matériau composite à matrice organique que l'on désire réaliser.

Par ailleurs, le diamètre intérieur de la frette 12 est inférieur ou égal au diamètre extérieur de la bague métallique 10 que l'on désire introduire dans la pièce.

Pour réaliser une pièce incorporant la bague composite 18 de la figure 1, deux modes de réalisation sont possibles.

Selon un premier mode de réalisation de l'invention, la bague composite 18 est d'abord réalisée, puis elle est introduite dans la pièce. En d'autres termes, la bague métallique 10 est montée dans la frette 12 avant d'être introduite dans la pièce. Dans ce cas, la bague composite 18 peut être introduite soit dans la pièce finie, soit dans la pièce en cours de fabrication.

Selon un deuxième mode de réalisation de l'invention, la frette 12 est d'abord introduite dans la pièce, lors de la fabrication de celle-ci. C'est alors seulement lorsque la matrice organique de la pièce est polymérisée que la bague métallique 10 est montée dans la frette 12.

Dans tous les cas, on réalise la frette 12 séparément de la bague métallique 10. Le montage de la bague métallique 10 dans la frette 12 s'effectue après avoir refroidi la bague métallique suffisamment pour en diminuer provisoirement le diamètre extérieur.

Pour réaliser la frette 12, on bobine la ou les fibres 14 sur un mandrin présentant le même diamètre extérieur que la bague métallique 10. Selon le cas, la ou les fibres 14 bobinées sur le mandrin peuvent être préimprégnées de résine ou sèches.

Lorsque la ou les fibres 14 sont préimprégnées de résine, on polymérise l'ébauche de frette montée sur le mandrin. On sépare ensuite le mandrin de la frette 12 ainsi obtenue en utilisant des procédés classiques. Parmi ces procédés, on citera le refroidissement de l'ensemble conduisant à une contraction du mandrin suffisante pour démonter la frette, la destruction du mandrin ou l'utilisation d'un mandrin démontable.

Lorsque la ou les fibres 14 bobinées sur le mandrin sont des fibres sèches, on imprègne ensuite ces fibres de résine 16, par exemple en utilisant le procédé RTM. La suite du procédé est identique au cas précédent, c'est-à-dire que l'ébauche de frette montée sur le mandrin est polymérisée, après quoi la frette obtenue est séparée du mandrin.

Il est ainsi possible soit de fabriquer directement une frette 12 présentant la longueur de la frette que l'on désire réaliser, soit de fabriquer sur un mandrin 20 (figure 2) une frette tubulaire 12', de plus grande longueur, que l'on tronçonne ensuite (flèches 21) à la longueur de la bague métallique qui doit être montée dans la frette.

Dans le premier mode de réalisation de l'invention, la frette 12 obtenue est montée ensuite sur la bague métallique 10 que l'on désire introduire dans la pièce en matériau composite à matrice organique. A cet effet, on procède à un refroidissement de la bague métallique 10, suffisant pour que le diamètre extérieur de cette bague devienne inférieur au diamètre intérieur de la frette 12. Ce refroidissement peut notamment être obtenu en trempant la bague métallique 10 dans de l'azote liquide. L'emmanchement de la frette 12 sur la bague métallique 10 peut alors être effectué aisément. Lorsque l'ensemble revient à la température ambiante, la bague métallique 10 est bloquée à demeure à l'intérieur de la frette 12.

La bague composite 18 obtenue par le procédé de fabrication qui vient d'être décrit est ensuite introduite dans la pièce en matériau composite à matrice organique soit, de préférence, lors de la fabrication de cette pièce, soit à la fin de cette fabrication.

Lorsque la pièce en matériau composite à matrice organique est fabriquée selon la technique traditionnelle du drapage, les nappes de fibres préimprégnées de résine constituant la pièce peuvent être drapées directement autour de la ou des bagues composites 18 qui doivent être insérées dans cette pièce. On assure ainsi la continuité des fibres rentrant dans la composition de la pièce en matériau composite. De plus, la polymérisation ultérieure de la résine est sans conséquence sur la tenue mécanique de la pièce. En effet, la présence de la frette 12 autour de chacune des bagues métalliques 10 absorbe la dilatation de celles-ci qui se produit lors du cycle de polymérisation. En d'autres termes, du fait de la présence de la frette 12, la bague métallique 10 ne se dilate pas mais se comprime élastiquement. Par conséquent, la bague composite 18 formée par l'assemblage de la bague métallique 10 et de la frette 12 ne se dilate pratiquement pas plus que le matériau composite qui l'entoure lorsque la résine contenue dans ce matériau est polymérisée.

Dans le cas où la pièce en matériau composite à matrice organique est fabriquée selon la technique RTM, on place la ou les bagues composites 18, avec une préforme de fibres sèches, dans la cavité d'un moule adapté à la forme de la pièce à fabriquer. Le moule est ensuite mis sous vide et une résine de faible viscosité est injectée dans le moule, sous basse pression. Un cycle de polymérisation est ensuite appliqué à la résine, à l'intérieur du moule. Ce dernier est ensuite refroidi, puis ouvert, afin d'en extraire la pièce obtenue.

Les avantages notés précédemment dans le cas d'une pièce obtenue par le procédé classique du drapage se retrouvent dans ce cas. De plus, l'avantage découlant de la non dilatation de la bague métallique 10 lors du cycle de polymérisation est encore plus sensible, du fait que la température de polymérisation des résines utilisées dans le procédé RTM est plus élevée que lorsqu'on utilise les techniques classiques de drapage. En outre, il est à noter que les pièces susceptibles d'être obtenues par la technique RTM sont fréquemment des pièces de géométrie complexe telles que des carters et des boîtiers, dans lesquelles on insère fréquemment des éléments métalliques tels que des bagues.

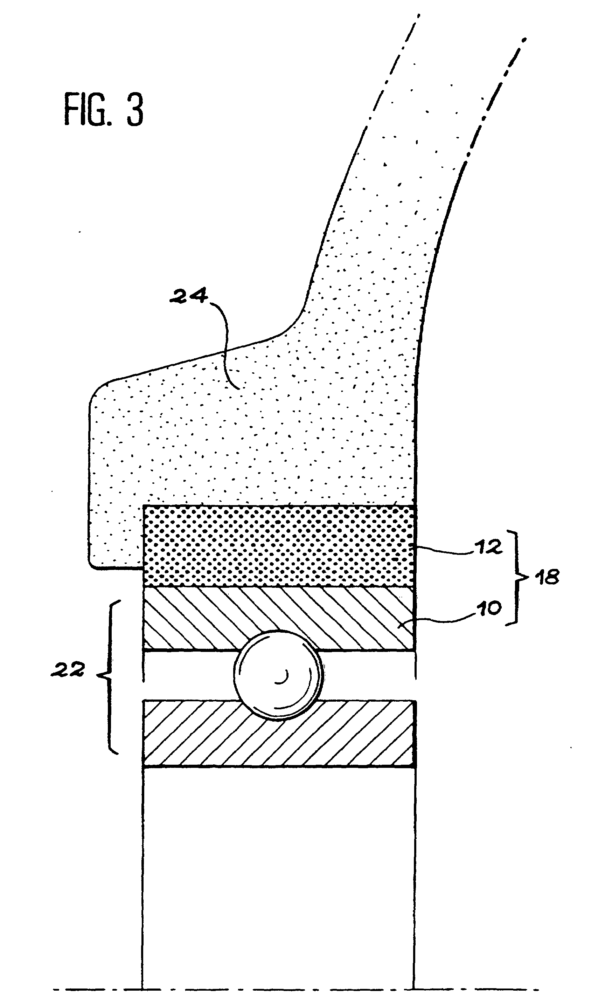

Un exemple d'une pièce obtenue selon la technique RTM et présentant une bague métallique 10 insérée en cours de fabrication de la manière qui vient d'être décrite est illustré sur la figure 3. Dans cet exemple, la bague composite 18 comprend une frette 12 encerclant une bague métallique 10 constituée par la bague extérieure d'un roulement à billes 22. La frette 12 de la bague composite 18 a été intégrée dans un moyeu 24 d'une pièce en matériau composite à matrice organique, lors de l'étape de moulage de cette pièce dans le cadre de la technique RTM.

Il est à noter qu'une pièce ainsi obtenue peut également supporter sans dommage d'importantes variations de température lors de son utilisation. En effet, la frette 12 empêche la dilatation de la bague métallique 10, qui se produirait normalement lors de ces variations de température. Par conséquent, les dilatations de la pièce en matériau composite et de la bague composite 18 sont sensiblement les mêmes. Il n'existe donc pratiquement aucun risque de déformation de la pièce en matériau composite à matrice organique par la bague métallique.

Comme on l'a décrit auparavant, la bague composite 18 est intégrée de préférence dans la pièce au cours de la fabrication de celle-ci. En variante, il est cependant possible de procéder à cette intégration après la fabrication de la pièce, dans le premier mode de réalisation de l'invention.

Dans ce cas, la pièce fabriquée présente avantageusement un évidement sensiblement de la taille de la bague composite. Un usinage superficiel de la paroi de cet évidement permet d'introduire la bague composite, sans dommage important pour les fibres entrant dans la composition de la pièce en matériau composite à matrice organique.

Cette solution peut être utilisée dans tous les cas où la pièce est appelée à subir des variations de température importantes (au moins 100°C) lors de son utilisation. La solution précédemment décrite, selon laquelle la bague composite est insérée dans la pièce lors de sa fabrication est toutefois préférée.

Dans le deuxième mode de réalisation de l'invention, on introduit la frette 12 dans la pièce, lors de la fabrication de celle-ci. Cela peut se faire en utilisant la technique traditionnelle de drapage, ou en utilisant la technique RTM. Dans ce dernier cas, la frette 12 est placée dans le moule, avec la préforme de fibre sèche. Quelle que soit la technique utilisée, la bague métallique 10 n'est mise en place dans la frette 12, pour former la bague composite 18, que lorsque la résine formant la matrice composite de la pièce a été polymérisée.

La pièce obtenue par ce deuxième mode de réalisation de l'invention présente les mêmes caractéristiques et avantages que lorsque le premier mode de réalisation est utilisé.

## Revendications

1. Procédé d'introduction d'une bague métallique (10) dans une pièce en matériau composite à matrice organique, procédé **caractérisé en ce qu'**il comprend les étapes suivantes:

   - réalisation séparée d'une frette (12) incluant au moins une fibre (14) bobinée et présentant un diamètre intérieur inférieur ou égal au diamètre extérieur de la bague métallique (10) ;
   - montage de la bague métallique (10) dans la frette (12), par refroidissement de ladite bague, de façon à former une bague composite (18) présentant un coefficient de dilatation sensiblement égal à celui de ladite pièce.

2. Procédé selon la revendication 1, dans lequel le montage de la bague métallique (10) dans la frette (12) précède une étape d'introduction de la bague composite (18) dans la pièce finie ou en cours de fabrication.

3. Procédé selon la revendication 1, dans lequel la frette (12) est introduite dans la pièce en cours de fabrication et le montage de la bague métallique (10) dans la frette (12) est effectué ultérieurement, après une étape de polymérisation de la matrice organique de la pièce.

4. Procédé selon l'une quelconque des revendications 1 à 3, dans lequel on réalise la frette (12) en bobinant au moins une fibre (14) préimprégnée de résine sur un mandrin, en polymérisant la résine, puis en séparant le mandrin de la frette ainsi formée.

5. Procédé selon l'une quelconque des revendications 1 à 3, dans lequel on réalise la frette (12) en bobinant au moins une fibre (14) sèche sur un mandrin, en imprégnant la fibre de résine, en polymérisant la résine, puis en séparant le mandrin de la frette ainsi formée.

6. Procédé selon l'une quelconque des revendications précédentes, dans lequel on réalise une frette tubulaire (12'), que l'on tronçonne à la longueur de la bague métallique (10).

7. Procédé selon l'une quelconque des revendications précédentes, dans lequel on utilise des fibres de carbone pour réaliser la frette (12).

8. Procédé selon l'une quelconque des revendications 1 et 2, dans lequel on introduit la bague composite (18) dans un logement prévu à cet effet dans la pièce finie.

9. Procédé selon l'une quelconque des revendications 1 à 7, dans lequel on introduit la frette (12) ou la bague composite (18), ainsi qu'une préforme de fibres sèches, dans un moule présentant la forme de la pièce à fabriquer, on injecte de la résine dans le moule, on polymérise cette résine, on refroidit le moule, on l'ouvre et on en extrait la pièce finie.

10. Pièce en matériau composite à matrice organique, comprenant au moins une bague métallique (10) insérée dans ledit matériau, pièce **caractérisée en ce que** la bague métallique (10) est entourée d'une frette (12) incluant au moins une fibre (14) bobinée autour de la bague métallique, noyée dans une matrice de résine (16) polymérisée, la bague métallique (10) et la frette (14) qui l'entoure formant une bague composite (18) présentant un coefficient de dilatation sensiblement égal à celui de ladite pièce.

11. Pièce selon la revendication 10, dans laquelle ladite fibre (14) est une fibre de carbone.

**Patentansprüche**

1. Verfahren zum Einführen eines metallischen Rings (10) in ein Teil aus Verbundmaterial mit organischer Matrix, wobei das Verfahren **dadurch gekennzeichnet ist, dass** es die folgenden Schritte umfasst:

    - getrennte Herstellung eines Bundrings bzw. einer Umwickelung (12) mit mindestens einer gewickelten Faser (14), die einen Innendurchmesser aufweist, der gleich oder kleiner dem Außendurchmesser des metallischen Rings (10) ist,
    - Montage des metallischen Rings (10) in dem Bundring (12) durch Abkühlen des Rings derart, dass ein Verbundring (18) gebildet wird, der einen Dehnungskoeffizienten aufweist, der im wesentlichen gleich demjenigen des (Verbundmaterial-)Teils ist.

2. Verfahren nach Anspruch 1, wobei die Montage des metallischen Rings (10) in dem Bundring (12) einem Schritt des Einsetzens des Verbundrings (18) in das fertiggestellte oder in der Herstellung befindliche Teil vorausgeht.

3. Verfahren nach Anspruch 1, wobei der Bundring (12) im Verlauf der Herstellung in das Teil eingesetzt wird und anschließend die Montage des metallischen Rings (10) in dem Bundring (12) nach einem Polymerisierungsschritt der organischen Matrix des Teils ausgeführt wird.

4. Verfahren nach einem der Ansprüche 1 bis 3, wobei der Bundring (12) hergestellt wird, indem mindestens eine mit Harz vorgetränkte Faser (14) auf einen Dorn aufgewickelt, das Harz polymerisiert und dann der Dorn von dem so gebildeten Bundring getrennt wird.

5. Verfahren nach einem der Ansprüche 1 bis 3, wobei der Bundring (12) hergestellt wird, indem mindestens eine trockene Faser (14) auf einen Dorn aufgewickelt, die Faser mit Harz getränkt, das Harz polymerisiert und dann der Dorn von dem so gebildeten Bundring getrennt wird.

6. Verfahren nach einem der vorangehenden Ansprüche, wobei ein rohrförmiger Bundring (12') hergestellt wird, der auf die Länge des metallischen Rings (10) abgelängt wird.

7. Verfahren nach einem der vorangehenden Ansprüche, wobei Kohlenstofffasern zur Herstellung des Bundrings (12) verwendet werden.

8. Verfahren nach einem der Ansprüche 1 oder 2, wobei der Verbundring (18) in einen zu diesem Zweck in dem fertiggestellten Teil vorgesehenen Sitz eingesetzt wird.

9. Verfahren nach einem der Ansprüche 1 bis 7, wobei der Bundring (12) oder der Verbundring (18) sowie eine Vorform getrockneter Fasern in eine Form eingebracht werden, welche die Form des herzustellenden Teils aufweist, das Harz in die Form gegossen, dieses Harz polymerisiert, die Form abgekühlt, diese geöffnet und das fertiggestellte Teil aus ihr entnommen wird.

10. Teil aus Verbundmaterial mit organischer Matrix, mit mindestens einem in das Material eingesetzten metallischen Ring (10), wobei das Teil **dadurch gekennzeichnet ist, dass** der metallische Ring (10) von einem Bundring (12) umgeben ist, der mindestens eine um den metallischen Ring gewickelte und in einer polymerisierten Harzmatrix (16) getränkte Faser(14) aufweist, wobei der metallische Ring (10) und der Bundring (14), der diesen umgibt, einen Verbundring (18) mit einem Dehnungskoeffizienten bilden, der im wesentlichen gleich demjenigen des Teils ist.

11. Teil nach Anspruch 10, wobei die Faser (14) eine Kohlenstofffaser ist.

**Claims**

1. Method of introducing a metallic ring (10) into a part made from a composite material with an organic matrix, the method **characterised in that** it comprises the following steps :

    - separately producing a band (12) including at least one wound fibre (14) and having an internal diameter which is smaller than or equal to the external diameter of the metallic ring (10);
    - mounting the metallic ring (10) in the band (12) by cooling the said ring, in such a way as to form a composite ring (18) having an expansion coefficient which is substantially equal to that of the said part.

2. Method according to claim 1, in which the mounting of the metallic ring (10) in the band (12) precedes a step introducing the composite ring (18) into the finished part or during production.

3. Method according to claim 1, in which the band (12) is introduced into the part during production and the mounting of the metallic ring (10) in the band (12) is performed later, after a polymerisation stage of the organic matrix of the part.

4. Method according to any of claims 1 to 3, in which the band (12) is made by winding onto a mandrel at least one fibre (14) pre-impregnated with resin, polymerising the resin, then separating the mandrel from the band (12) formed in this way.

5. Method according to any of claims 1 to 3, in which the band (12) is made by winding onto a mandrel at least one dry fibre (14), impregnating the fibre with resin, polymerising the resin, then separating the mandrel from the band (12) formed in this way.

6. Method according to any of the preceding claims, in which a tubular band (12') is made which is cut into sections along the length of the metallic ring (10).

7. Method according to any of the preceding claims, in which carbon fibres are used to produce the band (12).

8. Method according to either of claims 1 and 2, in which the composite ring (18) is introduced into a housing provided for this purpose in the finished part.

9. Method according to any of claims 1 to 7, in which the band (12) or the composite ring (18), as well as a preform of dry fibres, is introduced into a mould in the shape of the part to be produced, the resin is injected into the mould, this resin is polymerised, the mould is cooled, it is opened and the finished part is removed.

10. Part made from a composite material with an organic matrix, comprising at least one metallic ring (10) inserted into the said material, the part **characterised in that** the metallic ring (10) is surrounded by a band (12) including at least one fibre (14) wound around the metallic ring, sunk in a matrix of polymerised resin (16), the metallic ring (10) and the band (14) surrounding it forming a composite ring (18) with an expansion coefficient substantially equal to that of the said part.

11. Part according to claim 10, in which the said fibre (14) is a carbon fibre.

FIG. 1

FIG. 2

8

# FIG. 3